# FASCICULE DE BREVET EUROPEEN

(11) **EP 4 358 108 B1**
(45) Date de publication et mention de la délivrance du brevet: **15.04.2026**
(21) Numéro de dépôt: 23204366.1
(22) Date de dépôt: 18.10.2023
(51) Int. Cl.: H01H 39/00

(54) **DISPOSITIF DE PROTECTION ÉLECTRIQUE DE TYPE COUPE-CIRCUIT POSITIONNABLE SUR UN CÂBLE ÉLECTRIQUE CONTINU ET AÉRONEF LE COMPRENANT**
ELEKTRISCHE SCHUTZVORRICHTUNG VOM TYP EINER TRENNSICHERUNG, DER AN EINEM DURCHGEHENDEN ELEKTRISCHEN KABEL POSITIONIERT WERDEN KANN, UND FLUGZEUG, DAS DIESEN ENTHÄLT
ELECTRICAL PROTECTION DEVICE OF THE SWITCH FUSE TYPE POSITIONABLE ON A CONTINUOUS ELECTRICAL CABLE AND AIRCRAFT COMPRISING THE SAME

(30) Priorité: 20.10.2022 FR 2210835
(43) Date de publication de la demande: 24.04.2024
(73) Titulaire: AIRBUS OPERATIONS (S.A.S.), 31060 Toulouse (FR)
(72) Inventeur: LACOSTE, Jean-Marc, 31060 Toulouse (FR); DUFLOS DE SAINT AMAND, Vincent, 31060 Toulouse (FR)
(74) Mandataire: Fantin, Laurent

(56) Documents cités:
- FR-A1- 3 051 282
- US-A1- 2003 230 177
- US-B1- 9 774 179

## Description

La présente demande se rapporte à un dispositif de protection électrique de type coupe-circuit positionnable sur un câble électrique continu ainsi qu'à un aéronef comprenant au moins un tel dispositif de protection électrique.

Le document US 2003/230177 A1 divulgue un dispositif de protection électrique de type coupe-circuit adapté pour équiper un câble électrique, le dispositif de protection électrique comportant un boîtier, un système de liaison configuré pour relier le boîtier et le câble électrique ainsi qu'un système de sectionnement, positionné dans le boîtier, configuré pour occuper des états inactivé et activé correspondant respectivement aux états passant et non passant du dispositif de protection électrique ; le système de liaison et le système de sectionnement étant agencés de manière à ce que le système de sectionnement sectionne le câble électrique lors d'un passage de l'état inactivé à l'état activé.

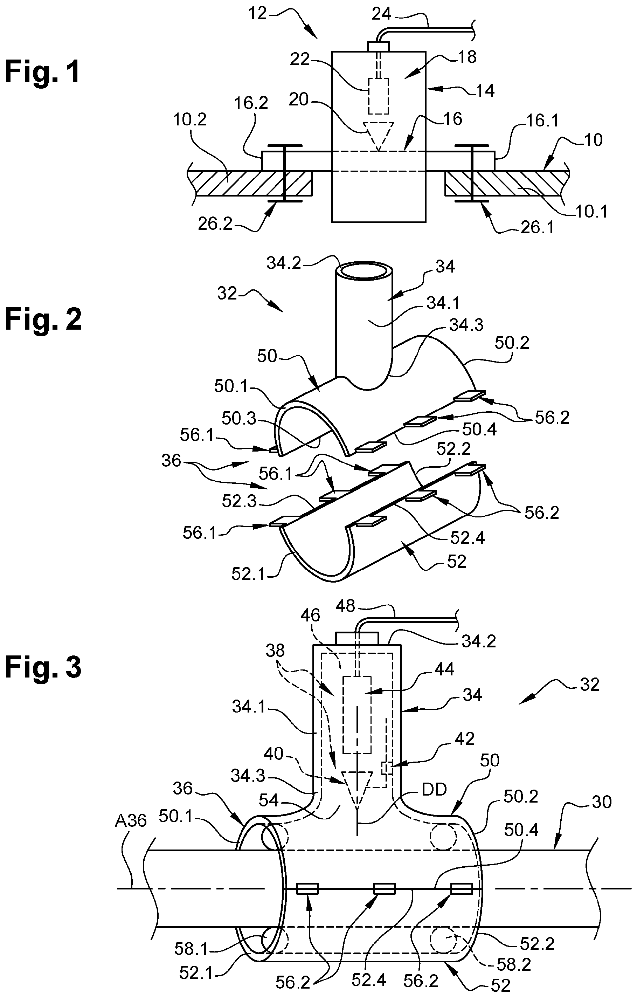

Selon un mode de réalisation visible sur la figure 1, un câble de puissance 10 est équipé d'un dispositif de protection électrique 12 de type coupe-circuit reliant deux tronçons 10.1, 10.2 du câble de puissance 10.

Le dispositif de protection électrique 12 comprend un boîtier 14, une barre conductrice 16 en un matériau conducteur qui traverse le boîtier 14 et présente des première et deuxième extrémités 16.1, 16.2 positionnées à l'extérieur du boîtier 14 ainsi qu'un système de sectionnement 18, positionné dans le boîtier 14, configuré pour occuper un état inactivé dans lequel le système de sectionnement 18 n'interfère pas avec la barre conductrice 16 et un état activé dans lequel le système de sectionnement 18 a sectionné la barre conductrice 16. Selon 8un mode de réalisation, le système de sectionnement 18 comprend un couteau 20 mobile entre une première position, correspondant à l'état inactivé, dans laquelle le couteau 20 est écarté de la barre conductrice 16 et une deuxième position, correspondant à l'état activé, dans laquelle le couteau 20 a sectionné la barre conductrice 16. Le système de sectionnement 18 comprend également une commande 22 configurée pour provoquer, à réception d'un signal, un changement de position du couteau 20 et son passage de la première position vers la deuxième position. La commande 22 est une charge pyrotechnique qui est déclenchée à réception d'un signal électrique transmis par un câble électrique 24.

En fonctionnement, la première extrémité 16.1 de la barre conductrice 16 est reliée à l'extrémité du premier tronçon 10.1 par une première connexion électrique 26.1. La deuxième extrémité 16.2 de la barre conductrice 16 est reliée à l'extrémité du deuxième tronçon 10.2 par une deuxième connexion électrique 26.2. Les première et deuxième connexions électriques 26.1, 26.2 sont configurées pour assurer une continuité électrique entre la première ou deuxième extrémité 16.1, 16.2 de la barre conductrice 16 et l'extrémité du premier ou deuxième tronçon 10.1, 10.2.

En cas de dysfonctionnement ou lorsqu'il a été activé, le dispositif de protection électrique 12 doit être remplacé le plus rapidement possible. Par conséquent, les première et deuxième connexions électriques 26.1, 26.2 sont démontables et se présentent chacune sous la forme d'un connecteur amovible ou d'un élément de fixation maintenant plaquée la première ou deuxième extrémité 16.1, 16.2 de la barre conductrice 16 contre l'extrémité du premier ou deuxième tronçon 10.1, 10.2.

Ce mode de réalisation n'est pas satisfaisant car les première et deuxième connexions électriques 26.1, 26.2 génèrent un échauffement local par effet Joule. Cet échauffement doit être pris en compte lors de la conception des composants du dispositif de protection électrique 12 et des éléments environnants, ce qui se traduit par un surdimensionnement et donc une augmentation de la masse embarquée.

Selon un autre inconvénient, les première et deuxième connexions électriques 26.1, 26.2 peuvent se déconnecter de manière intempestive. Ce risque de déconnexion doit être pris en compte dans le calcul de probabilité de perte de la liaison électrique.

La présente invention vise à remédier à tout ou partie des inconvénients de l'art antérieur.

A cet effet, l'invention a pour objet un dispositif de protection électrique de type coupe-circuit adapté pour équiper un câble électrique, le dispositif de protection électrique comportant un boîtier, un système de liaison configuré pour relier le boîtier et le câble électrique en fonctionnement ainsi qu'un système de sectionnement, positionné dans le boîtier, configuré pour occuper des états inactivé et activé correspondant respectivement aux états passant et non passant du dispositif de protection électrique.

Selon l'invention, le système de liaison est configuré pour présenter un état ouvert dans lequel il permet la mise en place du câble électrique et un état fermé dans lequel il entoure le câble électrique en fonctionnement, le système de liaison et le système de sectionnement étant agencés de manière à ce que, lorsque le système de liaison est à l'état fermé, le système de sectionnement sectionne le câble électrique lors d'un passage de l'état inactivé à l'état activé. Selon l'invention, le câble électrique est continu et il n'existe aucune connexion électrique susceptible de générer un échauffement thermique. L'absence de connexions électriques permet également de supprimer les risques de déconnexion.

Selon une autre caractéristique, le système de liaison comprend une première partie solidaire du boîtier et une deuxième partie mobile par rapport à la première partie entre une position écartée de la première partie correspondant à l'état ouvert du système de liaison et une position reliée à la première partie correspondant à l'état fermé du système de liaison. En complément, le système de liaison comprend au moins une attache pour maintenir les première et deuxième parties dans la position reliée.

Selon une autre caractéristique, les première et deuxième parties sont des coques demi-cylindres qui, une fois assemblées, forment un tube entourant le câble électrique en fonctionnement.

Selon une autre caractéristique, chacune des première et deuxième parties comprend des premier et deuxième bords longitudinaux. En complément, le système de liaison comprend au moins une première attache pour relier les premiers bords longitudinaux des première et deuxième parties entre eux ainsi qu'au moins une deuxième attache pour relier les deuxièmes bords longitudinaux des première et deuxième parties entre eux.

Selon une autre caractéristique, le système de liaison comprend plusieurs premières attaches réparties le long des premiers bords longitudinaux des première et deuxième parties et/ou plusieurs deuxièmes attaches réparties le long des deuxièmes bords longitudinaux des première et deuxième parties.

Selon une autre caractéristique, chaque première ou deuxième attache comprend un premier élément solidaire de la première partie ainsi qu'un deuxième élément solidaire de la deuxième partie, les premier et deuxième éléments étant configurés pour se clipser l'un à l'autre à l'état fermé.

Selon une autre caractéristique, le système de sectionnement comprend un couteau mobile selon une direction de déplacement entre une première position correspondant à l'état inactivé et une deuxième position correspondant à l'état activé. En complément, le système de liaison forme, à l'état fermé, un tube cylindrique entourant le câble électrique en fonctionnement, le couteau étant situé à l'extérieur du tube dans la première position et à l'intérieur du tube dans la deuxième position.

Selon une autre caractéristique, la direction de déplacement et l'axe de révolution du tube formé par le système de liaison à l'état fermé sont sécants et sensiblement perpendiculaires. Selon une autre caractéristique, le dispositif de protection électrique comprend au moins un système d'étanchéité pour isoler le couteau d'un environnement extérieur à un tube formé par le système de liaison à l'état fermé.

Selon une autre caractéristique, le système d'étanchéité comprend au moins un premier joint torique ainsi qu'au moins un deuxième joint torique intercalés, en fonctionnement, entre le câble électrique et le tube formé par le système de liaison à l'état fermé, le premier joint torique étant positionné entre une première extrémité du tube et le couteau, le deuxième joint torique étant positionné entre une deuxième extrémité du tube et le couteau. L'invention a également pour objet un aéronef comprenant au moins un câble électrique ainsi qu'un dispositif de protection électrique selon l'une des caractéristiques précédentes. D'autres caractéristiques et avantages ressortiront de la description de l'invention qui va suivre, description donnée à titre d'exemple uniquement, en regard des dessins annexés parmi lesquels :
- La figure 1 est une représentation schématique d'un dispositif de protection électrique de type coupe-circuit illustrant un mode de réalisation de l'art antérieur,
- La figure 2 est une vue en perspective d'un dispositif de protection électrique de type coupe-circuit, à l'état démonté, illustrant un mode de réalisation de l'invention,
- La figure 3 est une représentation schématique d'un dispositif de protection électrique de type coupe-circuit, monté sur un câble électrique, illustrant un mode de réalisation de l'invention.

Selon un mode de réalisation visible sur la figure 3, un câble électrique 30 est équipé d'au moins un dispositif de protection électrique 32 de type coupe-circuit. Ce câble électrique 30 peut être un câble électrique de puissance d'une installation électrique d'un aéronef. Le dispositif de protection électrique 32 est configuré pour occuper un état passant dans lequel un courant électrique peut circuler dans le câble électrique 30 entre deux points situés de part et d'autre du dispositif de protection électrique 32 et un état non passant dans lequel un courant électrique ne peut pas circuler dans le câble électrique entre ces deux points.

Le dispositif de protection électrique 32 comprend un boîtier 34, un système de liaison 36 configuré pour relier le boîtier 34 et le câble électrique 30 ainsi qu'un système de sectionnement 38, positionné dans le boîtier 34, configuré pour occuper un état inactivé correspondant à l'état passant du dispositif de protection électrique 32 et un état activé correspondat à l'état non du dispositif de protection électrique 32. Selon un mode de réalisation, le système de sectionnement 38 comprend un couteau 40 mobile entre une première position, correspondant à l'état inactivé, dans laquelle le couteau 40 est écarté du câble électrique 30 et une deuxième position, correspondant à l'état activé, dans laquelle le couteau 40 a sectionné le câble électrique 30. Le système de sectionnement 38 comprend un système de guidage 42 configuré pour guider le couteau 40 par rapport au boîtier 34 entre les première et deuxième positions. A titre d'exemple, le système de guidage 42 est une liaison glissière reliant le couteau 40 et le boîtier 34. Ce système de guidage 42 est configuré pour guider le couteau 40 en translation selon une direction de déplacement DD sécante avec le câble électrique 30.

Selon une configuration, la direction de déplacement DD est sensiblement perpendiculaire au câble électrique 30, au droit de la portion du câble électrique positionnée dans le prolongement de la direction de déplacement DD.

Le couteau 40 est configuré en fonction du câble électrique 30 de manière à obtenir un sectionnement certain du câble électrique 30 lors du transfert du couteau 40 de la première position vers la deuxième position. Lorsque le câble électrique 30 comprend en surface une couche de protection, cette dernière peut être retirée au droit du couteau 40 pour favoriser le sectionnement du câble électrique 30.

Selon un agencement, le boîtier 34 a une forme cylindrique, présente une face latérale cylindrique 34.1 et s'étend entre des première et deuxième extrémités 34.2, 34.3. Selon une configuration, la face latérale cylindrique 34.1 présente un axe de révolution confondu avec la direction de déplacement DD.

La première extrémité 34.2 est obturée par une paroi plate et positionnée dans un plan perpendiculaire à la direction de déplacement DD.

Le système de sectionnement 38 comprend également une commande 44 configurée pour provoquer, à réception d'un signal, un changement de position du couteau 40 et son passage de la première position vers la deuxième position. Selon une configuration, la commande 44 est une charge pyrotechnique qui est déclenchée à réception d'un signal électrique. Cette solution permet d'obtenir un sectionnement certain et rapide du câble électrique 30.

Selon un agencement, la commande 44 est positionnée entre le couteau 40 et la première extrémité 34.2 du boîtier 34. Le boîtier 34 comprend un logement 46, configuré pour loger au moins le couteau 40, le système de guidage 42 et la commande 44, débouchant au niveau de la deuxième extrémité 34.3 du boîtier 34 de manière à laisser passer le couteau 40 lors de son transfert de la première position vers la deuxième position.

Selon un mode de réalisation, le signal électrique est transmis via un câble électrique 48 traversant la paroi de la première extrémité 34.2 du boîtier 34.

Le système de liaison 36 est configuré pour occuper un premier état ouvert dans lequel il permet d'insérer le câble électrique 30 et un deuxième état fermé dans lequel il entoure le câble électrique 30, le système de liaison 36 et le système de sectionnement 38 étant agencés de manière à ce que, lorsque le système de liaison 36 est à l'état fermé, le système de sectionnement 38 sectionne le câble électrique 30 lors du passage de l'état inactivé à l'état activé.

Le système de liaison 36 forme, à l'état fermé, un tube entourant le câble électrique, le couteau 40 étant situé à l'extérieur du tube dans la première position et à l'intérieur du tube dans la deuxième position. Ce tube présente un axe de révolution A36 sécant avec la direction de déplacement DD et sensiblement perpendiculaire à cette dernière.

Selon une configuration, le système de liaison 36 est configuré pour pincer le câble électrique 30 à l'état fermé afin d'immobiliser le boîtier 34 par rapport au câble électrique 30.

Selon un mode de réalisation, le système de liaison 36 comprend une première partie 50 solidaire du boîtier 34 et une deuxième partie 52 mobile par rapport à la première partie 50 entre une position écartée de la première partie 50 correspondant à l'état ouvert du système de liaison 36 et une position reliée à la première partie 50 correspondant à l'état fermé du système de liaison 36. Dans la position reliée, les première et deuxième parties 50, 52 sont positionnées de part et d'autre d'un plan sensiblement perpendiculaire à la direction de déplacement DD. En complément le système de liaison 36 comprend au moins une attache pour maintenir les première et deuxième parties 50, 52 dans la position reliée.

Selon un agencement, les première et deuxième parties 50, 52 sont des coques demi-cylindres qui, une fois assemblées, forment un tube entourant le câble électrique 30 et l'enserrant. La première partie 50 comprend une ouverture 54 pour permettre au couteau 40 de se translater de la première position vers la deuxième position.

Les première et deuxième parties 50, 52 s'étendent entre des première et deuxième extrémités 50.1, 50.2 / 52.1, 52.2. Selon un agencement, ces première et deuxième extrémités 50.1, 50.2 / 52.1, 52.2 sont sensiblement centrées par rapport à la direction de déplacement DD et les première et deuxième parties 50, 52 délimitent, à l'état fermé, un tube.

Selon un mode de réalisation, les première et deuxième parties 50, 52 sont reliées entre elles par au moins une articulation leur permettant d'occuper l'état ouvert ou fermé et le système de liaison 36 comprend au moins une attache configurée pour maintenir les première et deuxième parties 50, 52 à l'état fermé.

Selon un autre mode de réalisation visible sur la figure 2, les première et deuxième parties 50, 52 sont indépendantes l'une de l'autre et ne sont reliées par aucune articulation.

Chacune des première et deuxième parties 50, 52 comprend des premiers et deuxièmes bords longitudinaux 50.3, 50.4 / 52.3, 52.4, le système de liaison 36 comprenant au moins une première attache 56.1 pour relier les premiers bords longitudinaux 50.3, 52.3 des première et deuxième parties 50, 52 entre eux ainsi qu'au moins une deuxième attache 56.2 pour relier les deuxièmes bords longitudinaux 50.4, 52.4 des première et deuxième parties 50, 52 entre eux.

Selon un agencement, le système de liaison 36 comprend plusieurs premières attaches 56.1 réparties le long des premiers bords longitudinaux 50.3, 52.3 des première et deuxième parties 50, 52 et/ou plusieurs deuxièmes attaches 56.2 réparties le long des deuxièmes bords longitudinaux 50.4, 52.4 des première et deuxième parties 50, 52.

Chaque première ou deuxième attache 50, 52 comprend un premier élément solidaire de la première partie 50 ainsi qu'un deuxième élément solidaire de la deuxième partie 52, les premier et deuxième éléments étant configurés pour se clipser l'un à l'autre à l'état fermé. Selon un mode de réalisation, le boîtier 34, la première partie 50 ainsi que les premiers éléments des première et deuxième attaches 56.1, 56.2 sont réalisés d'un seul tenant, par exemple en matière plastique. En complément, la deuxième partie 52 ainsi que les deuxièmes éléments des première et deuxième attaches 56.1, 56.2 sont réalisés d'un seul tenant.

Selon une autre caractéristique, le dispositif de protection électrique 32 comprend au moins un système d'étanchéité pour isoler le couteau 40 d'un environnement extérieur à un tube formé par le système de liaison 36 lorsque ce dernier est à l'état fermé. Selon un mode de réalisation, le système d'étanchéité comprend :
- au moins un premier joint torique 58.1, intercalé entre le câble électrique 30 et un tube formé par le système de liaison 36 à l'état fermé ainsi que positionné entre une première extrémité du tube et le couteau 40 en fonctionnement,
- au moins un deuxième joint torique 58.2, intercalé entre le câble électrique 30 et un tube formé par le système de liaison 36 à l'état fermé ainsi que positionné entre une deuxième extrémité du tube et le couteau 40 en fonctionnement.

Selon l'invention, le câble électrique est continu et il n'existe aucune connexion électrique susceptible de générer un échauffement thermique.

Selon une application, le dispositif de protection électrique 32 précédemment décrit est plus particulièrement destiné aux circuits électriques de forte puissance d'un aéronef, notamment d'un aéronef à propulsion électrique ou hybride.

## Revendications

1. Dispositif de protection électrique (32) de type coupe-circuit adapté pour équiper un câble électrique (30), le dispositif de protection électrique comportant un boîtier (34), un système de liaison (36) configuré pour relier le boîtier (34) et le câble électrique (30) en fonctionnement ainsi qu'un système de sectionnement (38), positionné dans le boîtier (34), configuré pour occuper des états inactivé et activé correspondant respectivement aux états passant et non passant du dispositif de protection électrique (32) ; le système de liaison (36) étant configuré pour présenter un état ouvert dans lequel il permet la mise en place du câble électrique (30) et un état fermé dans lequel il entoure le câble électrique (30) en fonctionnement, le système de liaison (36) et le système de sectionnement (38) étant agencés de manière à ce que, lorsque le système de liaison (36) est à l'état fermé, le système de sectionnement (38) sectionne le câble électrique (30) lors d'un passage de l'état inactivé à l'état activé.

2. Dispositif de protection électrique (32) selon la revendication précédente, **caractérisé en ce que** le système de liaison (36) comprend une première partie (50) solidaire du boîtier (34) et une deuxième partie (52) mobile par rapport à la première partie (50) entre une position écartée de la première partie (50) correspondant à l'état ouvert du système de liaison (36) et une position reliée à la première partie (50) correspondant à l'état fermé du système de liaison (36) et **en ce que** le système de liaison (36) comprend au moins une attache (56.1, 56.2) pour maintenir les première et deuxième parties (50, 52) dans la position reliée.

3. Dispositif de protection électrique (32) selon la revendication précédente, **caractérisé en ce que** les première et deuxième parties (50, 52) sont des coques demi-cylindres qui, une fois assemblées, forment un tube entourant le câble électrique (30) en fonctionnement.

4. Dispositif de protection électrique (32) selon l'une des revendications 2 à 3, **caractérisé en ce que** chacune des première et deuxième parties (50, 52) comprend des premier et deuxième bords longitudinaux (50.3, 50.4 / 52.3, 52.4) et **en ce que** le système de liaison (36) comprend au moins une première attache (56.1) pour relier les premiers bords longitudinaux (50.3, 52.3) des première et deuxième parties (50, 52) entre eux ainsi qu'au moins une deuxième attache (56.2) pour relier les deuxièmes bords longitudinaux (50.4, 52.4) des première et deuxième parties (50, 52) entre eux.

5. Dispositif de protection électrique (32) selon la revendication précédente, **caractérisé en ce que** le système de liaison (36) comprend plusieurs premières attaches (56.1) réparties le long des premiers bords longitudinaux (50.3, 52.3) des première et deuxième parties (50, 52) et/ou plusieurs deuxièmes attaches (56.2) réparties le long des deuxièmes bords longitudinaux (50.4, 52.4) des première et deuxième parties (50, 52).

6. Dispositif de protection électrique (32) selon l'une des revendications 4 à 5, **caractérisé en ce que** chaque première ou deuxième attache (56.1, 56.2) comprend un premier élément solidaire de la première partie (50) ainsi qu'un deuxième élément solidaire de la deuxième partie (52), les premier et deuxième éléments étant configurés pour se clipser l'un à l'autre à l'état fermé.

7. Dispositif de protection électrique (32) selon l'une des revendications précédentes, **caractérisé en ce que** le système de sectionnement (38) comprend un couteau (40) mobile selon une direction de déplacement (DD) entre une première position correspondant à l'état inactivé et une deuxième position correspondant à l'état activé et **en ce que** le système de liaison (36) forme, à l'état fermé, un tube cylindrique entourant le câble électrique (30) en fonctionnement, le couteau (40) étant situé à l'extérieur du tube dans la première position et à l'intérieur du tube dans la deuxième position.

8. Dispositif de protection électrique (32) selon la revendication précédente, **caractérisé en ce que** la direction de déplacement (DD) et un axe de révolution (A36) du tube formé par le système de liaison (36) à l'état fermé sont sécants et sensiblement perpendiculaires.

9. Dispositif de protection électrique (32) selon l'une des revendications 7 à 8, **caractérisé en ce que** le dispositif de protection électrique (32) comprend au moins un système d'étanchéité pour isoler le couteau (40) d'un environnement extérieur à un tube formé par le système de liaison (36) à l'état fermé.

10. Dispositif de protection électrique (32) selon la revendication précédente, **caractérisé en ce que** le système d'étanchéité comprend au moins un premier joint torique (58.1) ainsi qu'au moins un deuxième joint torique (58.2) intercalés, en fonctionnement, entre le câble électrique (30) et le tube formé par le système de liaison (36) à l'état fermé, le premier joint torique (58.1) étant positionné entre une première extrémité du tube et le couteau (40), le deuxième joint torique (58.2) étant positionné entre une deuxième extrémité du tube et le couteau (40).

11. Aéronef comprenant au moins un câble électrique (30) ainsi qu'un dispositif de protection électrique (32) selon l'une des revendications précédentes.

## Patentansprüche

1. Elektrische Schutzvorrichtung (32) vom Typ Stromkreisunterbrecher, die dazu eingerichtet ist, ein elektrisches Kabel (30) auszustatten, wobei die elektrische Schutzvorrichtung ein Gehäuse (34), ein Verbindungssystem (36), das dazu eingerichtet ist, das Gehäuse (34) und das elektrische Kabel (30) im Betrieb zu verbinden, sowie ein Trennsystem (38) aufweist, das im Gehäuse (34) angeordnet ist und dazu eingerichtet ist, inaktivierte und aktivierte Zustände einzunehmen, die jeweils den durchgängigen und nicht durchgängigen Zuständen der elektrischen Schutzvorrichtung (32) entsprechen, wobei das Verbindungssystem (36) so eingerichtet ist, dass es einen offenen Zustand aufweist, in dem es das Anbringen des elektrischen Kabels (30) ermöglicht, und einen geschlossenen Zustand, in dem es das elektrische Kabel (30) im Betrieb umgibt, wobei das Verbindungssystem (36) und das Trennsystem (38) so angeordnet sind, dass, wenn sich das Verbindungssystem (36) im geschlossenen Zustand befindet, das Trennsystem (38) das elektrische Kabel (30) bei einem Übergang vom inaktivierten Zustand in den aktivierten Zustand durchtrennt.

2. Elektrische Schutzvorrichtung (32) nach dem vorhergehenden Anspruch, **dadurch gekennzeichnet, dass** das Verbindungssystem (36) einen ersten Teil (50), der fest mit dem Gehäuse (34) verbunden ist, und einen zweiten Teil (52) umfasst, der in Bezug auf den ersten Teil (50) zwischen einer vom ersten Teil (50) entfernten Position, die dem offenen Zustand des Verbindungssystems (36) entspricht, und einer mit dem ersten Teil (50) verbundenen Position, die dem geschlossenen Zustand des Verbindungssystems (36) entspricht, beweglich ist, und dass das Verbindungssystem (36) wenigstens eine Befestigung (56.1, 56.2) zum Halten des ersten und zweiten Teils (50, 52) in der verbundenen Position umfasst.

3. Elektrische Schutzvorrichtung (32) nach dem vorhergehenden Anspruch, **dadurch gekennzeichnet, dass** der erste und der zweite Teil (50, 52) halbzylindrische Schalen sind, die nach dem Zusammenbau ein Rohr bilden, das im Betrieb das elektrische Kabel (30) umgibt.

4. Elektrische Schutzvorrichtung (32) nach einem der Ansprüche 2 bis 3, **dadurch gekennzeichnet, dass** jedes der ersten und zweiten Teile (50, 52) erste und zweite Längsränder (50.3, 50.4 / 52.3, 52.4) aufweist und dass das Verbindungssystem (36) wenigstens eine erste Befestigung (56.1) zum untereinander Verbinden der ersten Längsränder (50.3, 52.3) des ersten und zweiten Teils (50, 52) sowie wenigstens eine zweite Befestigung (56.2) zum untereinander Verbinden der zweiten Längsränder (50.4, 52.4) des ersten und zweiten Teils (50, 52) miteinander aufweist.

5. Elektrische Schutzvorrichtung (32) nach dem vorhergehenden Anspruch, **dadurch gekennzeichnet, dass** das Verbindungssystem (36) mehrere erste Befestigungen (56.1), die entlang der ersten Längsränder (50.3, 52.3) des ersten und zweiten Teils (50, 52) verteilt sind, und/oder mehrere zweite Befestigungen (56.2), die entlang der zweiten Längsränder (50.4, 52.4) des ersten und zweiten Teils (50, 52) verteilt sind, aufweist.

6. Elektrische Schutzvorrichtung (32) nach einem der Ansprüche 4 bis 5, **dadurch gekennzeichnet, dass** jede erste oder zweite Befestigung (56.1, 56.2) ein erstes Element, das mit dem ersten Teil (50) fest verbunden ist, sowie ein zweites Element, das mit dem zweiten Teil (52) fest verbunden ist, aufweist, wobei das erste und das zweite Element so eingerichtet sind, dass sie im geschlossenen Zustand verrasten.

7. Elektrische Schutzvorrichtung (32) nach einem der vorhergehenden Ansprüche, **dadurch gekennzeichnet, dass** das Trennsystem (38) ein Messer (40) aufweist, das entlang einer Bewegungsrichtung (DD) zwischen einer ersten Position, die dem inaktivierten Zustand entspricht, und einer zweiten Position, die dem aktivierten Zustand entspricht, beweglich ist, und dass das Verbindungssystem (36) im geschlossenen Zustand ein zylindrisches Rohr bildet, das das elektrische Kabel (30) im Betrieb umgibt, wobei sich das Messer (40) in der ersten Position außerhalb des Rohrs und in der zweiten Position innerhalb des Rohrs befindet.

8. Elektrische Schutzvorrichtung (32) nach dem vorhergehenden Anspruch, **dadurch gekennzeichnet, dass** die Bewegungsrichtung (DD) und eine Rotationsachse (A36) des Rohrs, die durch das Verbindungssystem (36) im geschlossenen Zustand gebildet ist, sich schneiden und im Wesentlichen im rechten Winkel zueinander stehen.

9. Elektrische Schutzvorrichtung (32) nach einem der Ansprüche 7 bis 8, **dadurch gekennzeichnet, dass** die elektrische Schutzvorrichtung (32) wenigstens ein Dichtungssystem aufweist, um das Messer (40) von einer Umgebung außerhalb eines Rohrs zu isolieren, das von dem Verbindungssystem (36) im geschlossenen Zustand gebildet ist.

10. Elektrische Schutzvorrichtung (32) nach dem vorhergehenden Anspruch, **dadurch gekennzeichnet, dass** das Dichtungssystem wenigstens einen ersten O-Ring (58.1) sowie wenigstens einen zweiten O-Ring (58.2) aufweist, die im Betrieb zwischen dem elektrischen Kabel (30) und dem durch das Verbindungssystem (36) gebildeten Rohr im geschlossenen Zustand eingefügt sind, wobei der erste O-Ring (58.1) zwischen einem ersten Ende des Rohrs und dem Messer (40) angeordnet ist und der zweite O-Ring (58.2) zwischen einem zweiten Ende des Rohrs und dem Messer (40) angeordnet ist.

11. Luftfahrzeug mit wenigstens einem elektrischen Kabel (30) sowie einer elektrischen Schutzvorrichtung (32) nach einem der vorhergehenden Ansprüche.

## Claims

1. Electrical protection device (32) of circuit-breaker type designed to equip an electrical cable (30), the electrical protection device comprising a casing (34), a connection system (36) configured to connect the casing (34) and the electrical cable (30) in operation, and a severing system (38), positioned in the casing (34), configured to assume inactivated and activated states corresponding to the on and off states of the electrical protection device (32), respectively; the connection system (36) being configured to have an open state in which it allows the electrical cable (30) to be put in place and a closed state in which it surrounds the electrical cable (30) in operation, the connection system (36) and the severing system (38) being arranged such that, when the connection system (36) is in the closed state, the severing system (38) severs the electrical cable (30) when passing from the inactivated state to the activated state.

2. Electrical protection device (32) as claimed in the preceding claim, wherein the connection system (36) comprises a first part (50) which is fixedly secured to the casing (34) and a second part (52) which can move with respect to the first part (50) between a position away from the first part (50) corresponding to the open state of the connection system (36) and a position connected to the first part (50) corresponding to the closed state of the connection system (36) and wherein the connection system (36) comprises at least one fastener (56.1, 56.2) for holding the first and second parts (50, 52) in the connected position.

3. Electrical protection device (32) as claimed in the preceding claim, wherein the first and second parts (50, 52) are semi-cylindrical shells which, once assembled, form a tube that surrounds the electrical cable (30) in operation.

4. Electrical protection device (32) as claimed in either of claims 2 and 3, wherein each of the first and second parts (50, 52) comprises first and second longitudinal edges (50.3, 50.4 / 52.3, 52.4) and wherein the connection system (36) comprises at least one first fastener (56.1) to connect the first longitudinal edges (50.3, 52.3) of the first and second parts (50, 52) to each other and at least one second fastener (56.2) to connect the second longitudinal edges (50.4, 52.4) of the first and second parts (50, 52) to each other.

5. Electrical protection device (32) as claimed in the preceding claim, wherein the connection system (36) comprises a plurality of first fasteners (56.1) distributed along the first longitudinal edges (50.3, 52.3) of the first and second parts (50, 52) and/or a plurality of second fasteners (56.2) distributed along the second longitudinal edges (50.4, 52.4) of the first and second parts (50, 52).

6. Electrical protection device (32) as claimed in either of claims 4 and 5, wherein each first or second fastener (56.1, 56.2) comprises a first element which is fixedly secured to the first part (50) and a second element which is fixedly secured to the second part (52), the first and second elements being configured to clip together in the closed state.

7. Electrical protection device (32) as claimed in one of the preceding claims, wherein the severing system (38) comprises a blade (40) that can move in a direction of displacement (DD) between a first position corresponding to the inactivated state and a second position corresponding to the activated state and wherein the connection system (36) forms, in the closed state, a cylindrical tube that surrounds the electrical cable (30) in operation, the blade (40) being situated outside the tube in the first position and inside the tube in the second position.

8. Electrical protection device (32) as claimed in the preceding claim, wherein the direction of displacement (DD) and an axis of revolution (A36) of the tube formed by the connection system (36) in the closed state intersect and are substantially perpendicular.

9. Electrical protection device (32) as claimed in either of claims 7 and 8, wherein the electrical protection device (32) comprises at least one sealing system for isolating the blade (40) from an environment outside a tube formed by the connection system (36) in the closed state.

10. Electrical protection device (32) as claimed in the preceding claim, wherein the sealing system comprises at least one first O-ring (58.1) and at least one second O-ring (58.2) which are inserted, in operation, between the electrical cable (30) and the tube formed by the connection system (36) in the closed state, the first O-ring (58.1) being positioned between a first end of the tube and the blade (40), the second O-ring (58.2) being positioned between a second end of the tube and the blade (40).

11. Aircraft comprising at least one electrical cable (30) and an electrical protection device (32) as claimed in one of the preceding claims.
